# EUROPÄISCHE PATENTANMELDUNG

(11) **EP 1 473 614 A2**
(43) Veröffentlichungstag der Anmeldung: **03.11.2004**
(21) Anmeldenummer: 04009751.1
(22) Anmeldetag: 23.04.2004
(51) Int. Cl.: G06F 1/00

(54) **Computersystem für ein Fahrzeug und Verfahren zum Kontrollieren des Datenverkehrs in einem solchen Computersystem**

(30) Priorität: 29.04.2003 DE 10319365
(71) Anmelder: Volkswagen AG, 38436 Wolfsburg (DE)
(72) Erfinder: Lux, Stefan, 38527 Meine (DE); Falk, Dörte, 38304 Wolfenbüttel (DE); Schnier, Carsten, 38259 Salzgitter (DE)
(74) Vertreter: Reitstötter - Kinzebach

(57) **Zusammenfassung**

Die vorliegende Erfindung betrifft ein Computersystem (1) für ein Fahrzeug mit einer zentralen Recheneinheit (2), einer ersten Schnittstelle (3) für einen externen Datenaustausch (11, 12) und einer in dem Computersystem (1) bei der ersten Schnittstelle (3) vorgesehenen Firewall (4), die den Datenstrom in das Computersystem (1) des Fahrzeugs filtert. Das erfindungsgemäße Computersystem ist dadurch gekennzeichnet, dass innerhalb der zentralen Recheneinheit (2) eine abgegrenzte Laufzeitumgebung (5) definiert ist, in der Anwendungsprogramme ablaufen können, ohne Einfluss auf die Laufzeitumgebung außerhalb der abgegrenzten Laufzeitumgebung (5) zu haben. Außerdem betrifft die vorliegende Erfindung ein Verfahren zum Kontrollieren des Datenverkehrs in ein und/oder in einem Computersystem eines Fahrzeugs. Bei dem Verfahren werden externe Daten über eine erste Schnittstelle (3) an eine zentrale Recheneinheit (2) übertragen, wobei die Daten in einer in dem Computersystem (1) vorgesehenen Firewall (4) gefiltert werden. Anwendungsprogramme laufen innerhalb einer abgegrenzten Laufzeitumgebung (5) ab, ohne Einfluss auf die Laufzeitumgebung außerhalb der abgegrenzten Laufzeitumgebung (5) zu haben.

## Beschreibung

Die vorliegende Erfindung betrifft ein Computersystem für ein Fahrzeug mit einer zentralen Recheneinheit, einer ersten Schnittstelle für einen externen Datenaustausch und einer in dem Computersystem bei der ersten Schnittstelle vorgesehenen Firewall, die den Datenstrom in das Computersystem des Fahrzeugs filtert. Ferner betrifft die Erfindung ein Verfahren zum Kontrollieren des Datenverkehrs in ein und/oder in einem Computersystem eines Fahrzeugs.

Moderne Kraftfahrzeuge weisen eine Vielzahl von elektronischen Geräten auf, welche über Steuergeräte gesteuert werden. Diese Steuergeräte sind über ein Netzwerk mit einer zentralen Recheneinheit vernetzt. Die Steuergeräte können Fehlermeldungen an die zentrale Recheneinheit übertragen. Dort können sie dann ausgelesen werden. Umgekehrt kann über die zentrale Recheneinheit Einfluss auf die in den Steuergeräten laufende Software genommen werden. Beispielsweise können Programmupdates in einzelne Steuergeräte geladen werden.

In zunehmendem Maße besteht das Bedürfnis, das Computersystem des Fahrzeugs mit externen Computern und externen Netzwerken zu verbinden. Bei der Reparatur eines Kraftfahrzeugs ist es beispielsweise von Vorteil, wenn über einen externen Computer der Werkstatt Diagnosedaten aus der zentralen Recheneinheit ausgelesen werden können und hierdurch eine schnelle und kostengünstige Fehleranalyse durchgeführt werden kann. Gleichermaßen besteht das Bedürfnis, das Computersystem des Fahrzeugs an das Internet anzukoppeln, so dass ein Datenaustausch mit beliebigen Einrichtungen der Werkstatt oder des Fahrzeugherstellers stattfinden kann. Auch kann die Ankopplung an das Internet der Unterhaltung von Fahrzeuginsassen dienen.

Bei der Kopplung des Computersystems des Fahrzeugs mit externen Einrichtungen ergibt sich jedoch ein Sicherheitsproblem. Über das Internet oder externe Computer können Viren oder andere schädigende Anwendungsprogramme in das Computersystem des Fahrzeugs gelangen. Solche schädigenden Anwendungsprogramme können große Probleme verursachen, wenn sie Steuergeräte sicherheitsrelevanter Funktionen des Kraftfahrzeugs beeinflussen. Wenn beispielsweise die Software eines Steuersystems für ein elektronisches Bremssystem so beeinflusst wird, dass das Bremssystem nicht mehr einwandfrei funktioniert, könnte dies katastrophale Konsequenzen beim Betrieb des Fahrzeugs haben.

Des Weiteren können nicht nur im Computersystem des Fahrzeugs befindliche Programme Schadfunktionen ausüben. Es reicht sogar der Zugriff von außen auf eine Diensteschnittstelle des Fahrzeugs aus, um Fehlfunktionen des Fahrzeugs auszulösen. Ob ein solcher Zugriff schädlich ist, kann beispielsweise vom Zustand des Fahrzeugs abhängen.

Es sind daher verschiedene Maßnahmen vorgeschlagen worden, das Computersystem des Fahrzeugs abzusichern.

In der WO 01/26331 A2 wird ein Fahrzeugnetzwerk vorgeschlagen, das einerseits einen Datenaustausch zwischen elektronischen Geräten innerhalb des Fahrzeugs und andererseits einen Datenaustausch mit externen Netzwerken ermöglicht. Für wesentliche Fahrzeugfunktionen wurden in diesem Netzwerk Sicherheitseinrichtungen bereitgestellt. Es ist unter Anderem für den Datenverkehr zwischen dem Fahrzeugnetzwerk und dem externen Netzwerk eine Firewall vorgesehen. Ferner wird der Datenverkehr verschlüsselt, und es wird geprüft, ob die Daten von autorisierten Geräten kommen. Nachteilhaft an dem in der WO 01/26331 A2 beschriebenen System ist, dass die Sicherheitsmaßnahmen für dynamisch geladene Anwendungsprogramme unzureichend sind. Auch die Filterfunktionen der Firewall reduzieren sich auf die Autorisierung von externen Geräten sowie auf die Protokollebene.

In der WO 02/17184 A1 wird ein Ferndiagnosesystem für Fahrzeuge beschrieben. Für den Datenaustausch mit externen Einrichtungen weisen die Fahrzeuge Mobilfunkeinrichtungen auf. Das Computersystem des Fahrzeugs weist jedoch nachteilhafterweise keine ausgeprägten Sicherheitsmechanismen auf. Vielmehr ist eine Firewall zwischen dem Computersystem einer Werkstatt und dem Internet vorgesehen.

Ein Nachteil von Sicherheitssystemen, die auf der Verwendung einer Firewall beruhen, ist, dass die Firewall für gewisse Anwendungen offen sein muss, da es gerade bezweckt wird, dass bestimmte Anwendungen auf das Computersystem des Fahrzeugs gelangen, um hier beispielsweise Programmupdates durchzuführen. Die Filterfunktion der Firewall muss daher entsprechend eingestellt werden. Dies hat jedoch zur Folge, dass auch unerwünschte Anwendungsprogramme auf das Computersystem des Fahrzeugs gelangen können.

Es ist die Aufgabe der vorliegenden Erfindung, ein Computersystem für ein Fahrzeug der Eingangs genannten Art bereitzustellen, das besser gegen die Übertragung und die Wirkungen unerwünschter Anwendungsprogramme geschützt ist. Ferner soll ein Verfahren zum Kontrollieren des Datenverkehrs in ein und/oder in einem Computersystem eines Fahrzeugs bereitgestellt werden, das das Computersystem besser gegen die Übertragung und die Wirkungen unerwünschter Anwendungsprogramme schützt.

Erfindungsgemäß wird diese Aufgabe durch ein Computersystem mit den Merkmalen des Anspruchs 1 und ein Verfahren mit den Merkmalen des Anspruchs 20 gelöst. Vorteilhafte Aus- und Weiterbildungen ergeben sich aus den Unteransprüchen.

Das erfindungsgemäße Computersystem ist dadurch gekennzeichnet, dass innerhalb der zentralen Recheneinheit eine abgegrenzte Laufzeitumgebung definiert ist, in der Anwendungsprogramme ablaufen können, ohne Einfluss auf die Laufzeitumgebung außerhalb der abgegrenzten Laufzeitumgebung zu haben.

In der abgegrenzten Laufzeitumgebung können die Anwendungsprogramme (oder sog. Applets) ablaufen, die durch die Firewall in die zentrale Recheneinheit gelangt sind, bei denen aber weiterhin unsicher ist, ob sie nicht das Computersystem des Fahrzeugs schädigen könnten. Das Konzept, eine abgegrenzte Laufzeitumgebung zu definieren, ist bei herkömmlichen Computern in einer Java-Umgebung unter dem Begriff Sandbox bekannt geworden. Eine Sandbox stellt sicher, dass keine unbekannte und möglicherweise schädliche Anwendung Zugang zu Systemressourcen erhält. Die Anwendungsprogramme laufen in der abgegrenzten Laufzeitumgebung ab und können dabei in ihrer Wirkung untersucht werden, ohne dass die Gefahr besteht, dass sicherheitsrelevante Funktionen des Fahrzeugs beeinträchtigt werden. Hierdurch wird ein Beitrag für die Sicherheit eines Fahrzeugs mit einem vernetzten Computersystem geschaffen.

Gemäß einer vorteilhaften Ausgestaltung des erfindungsgemäßen Computersystems weist die abgegrenzte Laufzeitumgebung einen Laufzeitumgebungs-Filter mit einem ersten Regelwerk für die in die abgegrenzte Laufzeitumgebung zu übertragenden Anwendungsprogramme auf. Dieses erste Regelwerk kann definieren, welche Anwendungsprogramme in der abgegrenzten Laufzeitumgebung ablaufen können. Ferner kann es definieren, von welchen Geräten übertragene Anwendungsprogramme in der abgegrenzten Laufzeitumgebung ablaufen können. Schließlich kann das erste Regelwerk definieren, von welchen Anwendern übertragene Anwendungsprogramme in der abgegrenzten Laufzeitumgebung ablaufen können.

Das aus Java-Umgebungen bekannte Sandbox-Konzept lässt sich nicht ohne Weiteres auf die zentrale Recheneinheit eines Computersystems für ein Fahrzeug übertragen. Daten und Programme, die in die abgegrenzte Laufzeitumgebung hinein- und hinausgelangen, müssen fahrzeugspezifisch festgelegt werden. Hierzu dient ein speziell für Fahrzeuganwendungen ausgestaltetes Regelwerk. Beispielsweise können in der abgegrenzten Laufzeitumgebung Anwendungsprogramme ablaufen, jedoch nicht auf den Fahrzeugbus zugreifen. Eine Datenübertragung von Daten, welche von den Anwendungsprogrammen generiert worden sind, kann jedoch möglich sein, um beispielsweise Updates durchzuführen.

Im Gegensatz zu der aus der Java-Umgebung bekannten Sandbox ist die gemäß der vorliegenden Erfindung verwendete abgegrenzte Laufzeitumgebung nicht auf eine Programmiertechnologie beschränkt, sondern beherrscht sämtliche für die Anwendungsprogrammierung verwendeten Programmiertechnologien bzw. -sprachen, wie z. B. Java, C/C++. Weiterhin wird die abgegrenzte Laufzeitumgebung um Regeln zur Behandlung spezifischer Fahrzeugkontexte bzw. Fahrzeugsystemzustände erweitert. Dabei kontrolliert die abgegrenzte Laufzeitumgebung vorzugsweise nur Applikationen, die innerhalb des Fahrzeugsystems ablaufen. Für Zugriffe von außen ist die Firewall vorgesehen.

Gemäß einer vorteilhaften Weiterbildung des erfindungsgemäßen Computersystems ist das erste Regelwerk von Fahrzeugeinrichtungen aus und/oder von einem externen Computer und/oder Netzwerk aus veränderbar. Bei der ersten Schnittstelle für den externen Datenaustausch kann beispielsweise ein Sonderkanal eingerichtet werden, über den auf das erste Regelwerk zugegriffen werden kann. Über diesen Sonderkanal kann dann auf das Regelwerk Einfluss genommen werden, je nach dem welche Daten und Anwendungsprogramme an das Computersystem übertragen werden sollen. Auch durch diese Ausgestaltung unterscheidet sich das erfindungsgemäße Computersystem von einem herkömmlichen Java-basierten Sandbox-Konzept.

Vorteilhaft an dieser Weiterbildung ist, dass man hierdurch sehr flexibel die Sicherheitseinstellungen der abgegrenzten Laufzeitumgebung zeitlich begrenzt verändern kann. Es ist nämlich häufig nur für ein sehr kurzes Zeitintervall erforderlich, die Sicherheitseinstellungen für die abgegrenzte Laufzeitumgebung einzuschränken, um Änderungen an dem Fahrzeug-Computersystem durchzuführen.

Gemäß einer Ausgestaltung des erfindungsgemäßen Computersystems ist die zentrale Recheneinheit über eine Fahrzeugbus-Schnittstelle mit dem Fahrzeugbus gekoppelt. Bei der Fahrzeugbus-Schnittstelle kann es sich um eine sog. Application-Protocoll-Interface (API) handeln. Auch diese Fahrzeugbus-Schnittstelle umfasst vorzugsweise einen Filter mit einem zweiten Regelwerk. Dieses zweite Regelwerk kann definieren, welche Daten auf den Fahrzeugbus übertragen werden können. Bei den Daten kann es sich auch um genau festgelegte Anwendungsprogramme handeln. Mit dem Fahrzeugbus sind Steuergeräte des Fahrzeugs gekoppelt. Das zweite Regelwerk definiert vorzugsweise, an welche Steuergeräte Daten von der zentralen Recheneinheit auf den Fahrzeugbus übertragen werden dürfen. Ferner kann die Fahrzeugbus-Schnittstelle vorzugsweise eine Authentifizierungs-Einheit umfassen, durch welche zertifizierte Daten hinsichtlich ihrer Herkunft überprüfbar sind. Hierdurch wird die Sicherheit des Computersystems weiter erhöht, da es möglich ist, den Daten eine sog. digitale Signatur hinzuzufügen. Mit der Fahrzeugbus-Schnittstelle kann dadurch festgestellt werden, von welchem Anwender oder von welchem Gerät die Daten übertragen worden sind.

Schließlich kann das Computersystem auch eine Entschlüsselungs- und Verschlüsselungseinheit enthalten. Dabei können z.B. asymmetrische Verschlüsselungsverfahren mit privaten und öffentlichen Schlüsseln verwendet werden. Auch durch diese Maßnahme wird die Sicherheit des Computersystems erhöht. Auch kann hierdurch die Privatsphäre eines Benutzers des Fahrzeugs gewahrt bleiben, wenn persönliche Daten übertragen werden.

Die erste Schnittstelle ist vorzugsweise für einen externen Datenaustausch mit einem externen Computer und/oder Netzwerk ausgebildet. Beispielsweise können Daten mit einem Werkstattcomputer ausgetauscht werden. Außerdem kann die Datenkommunikation über das Internet erfolgen. Hierfür kann das Computersystem z. B. eine Mobiltelefoneinrichtung für den externen Datenaustausch aufweisen. Im Übrigen kann alternativ oder zusätzlich ein Kabelanschluss für einen externen Computer, ein WLAN-Anschluss oder dgl. vorgesehen sein.

Die für die erste Schnittstelle vorgesehene Firewall umfasst vorzugsweise eine Programmanalyse-Einrichtung, mit der im Voraus definierte Anwendungsprogramme herausfilterbar sind. Ferner kann die Firewall eine Protokollanalyse-Einrichtung umfassen, mit der im Voraus definierte Protokolle herausfilterbar sind. Schließlich kann sie eine Adressenanalyse-Einrichtung umfassen, mit der im Voraus definierte Adressen herausfilterbar sind, sowie eine Inhaltanalyse-Einrichtung, mit der im Voraus definierte Inhalte des Datenstroms herausfilterbar sind. Diese Ausgestaltungen der Firewall erhöhen weiter die Sicherheit des Computersystems, da sie sehr viel weitergehende Filterfunktionen aufweist, als dies bei herkömmlichen Computersystemen für Fahrzeuge bekannt ist. Dabei sind die Sicherheitsmechanismen der Firewall speziell für kraftfahrzeugspezifische Verwendungen angepasst. Herkömmliche Firewalls, die in Computersystemen außerhalb von Kraftfahrzeugen eingesetzt werden, sind im vorliegenden Fall nicht ohne Weiteres einsetzbar, da andere Sicherheitskonzepte verwendet werden müssen.

Die bei der vorliegenden Erfindung verwendete Firewall ist so ausgebildet, dass ein Zugriff von außen auf eine Diensteschnittstelle des Computersystems nicht schädlich ist. Beispielsweise wird verhindert, dass ein Stellgliedtest ausgelöst wird, wenn das Fahrzeug bewegt wird. Ferner kann das Display des Fahrzeugs bei Dunkelheit während der Fahrt nicht invertiert werden. Schließlich ist festgelegt, dass etliche Steuergeräte während der Fahrt nicht in den Diagnosemodus versetzt werden können. Bei einem derartigen Diagnosemodus wird nämlich z. B. der Airbag außer Funktion gesetzt.

Gemäß einer weiteren bevorzugten Ausgestaltung des erfindungsgemäßen Computersystems sind auf der zentralen Recheneinheit Intrusion-Detection-Programme und/oder Scanner-Programme installiert. Sog. Intrusion-Detection-Programme sollen Angriffe auf schützenswerte Systeme oder Daten erkennen. Sie ergänzen einen Schutz nach außen, indem Angriffe aufgespürt werden, die von der Firewall nicht blockiert werden können. Darüber hinaus werden die Intrusion-Detection-Programme im Netzwerk eingesetzt, um vor unerlaubten internen Zugriffen, d.h. aus dem Netzwerk heraus, zu warnen. Das Intrusion-Detection-Programm kann beispielsweise auf der zentralen Recheneinheit installiert sein und dabei die in der abgegrenzten Laufzeitumgebung ablaufenden Anwendungsprogramme überprüfen.

Insgesamt kann das Computersystem des Fahrzeugs somit umfangreiche Sicherheitsmechanismen aufweisen, welche eine Firewall, eine abgegrenzte Laufzeitumgebung für Anwendungsprogramme sowie Intrusion-Detection-Programme umfassen. Auf diese Weise kann das Computersystem wirkungsvoll gegen Eingriffe von außen abgesichert werden. Insbesondere sicherheitsrelevante Komponenten werden effektiv geschützt.

Bei dem erfindungsgemäßen Verfahren zum Kontrollieren des Datenverkehrs in ein und/oder in einem Computersystem eines Fahrzeugs werden externe Daten über eine erste Schnittstelle an eine zentrale Recheneinheit übertragen, wobei die Daten von einer in dem Computersystem vorgesehenen Firewall gefiltert werden und es laufen Anwendungsprogramme innerhalb einer abgegrenzten Laufzeitumgebung ab, ohne Einfluss auf die Laufzeitumgebung außerhalb der abgegrenzten Laufzeitumgebung zu haben. Wie bei dem vorstehend beschriebenen Computersystem wird auch durch das erfindungsgemäße Verfahren die Sicherheit bei der Datenübertragung in das Computersystem wirksam erhöht. Außerdem wird die Sicherheit in dem Computersystem erhöht, wenn Anwendungsprogramme darin ausgeführt werden.

Die Anwendungsprogramme, welche in die abgegrenzte Laufzeitumgebung übertragen werden sollen, werden vorzugsweise gefiltert, wobei beim Filtern ein erstes Regelwerk für die abgegrenzte Laufzeitumgebung angewendet wird. Hierdurch kann sichergestellt werden, dass nur im Voraus definierte Anwendungsprogramme in der abgegrenzten Laufzeitumgebung ablaufen. Ferner kann festgelegt werden, dass nur solche Anwendungsprogramme in der abgegrenzten Laufzeitumgebung ablaufen, die von im Voraus definierten Geräten übertragen worden sind. Schließlich können vorzugsweise nur solche Anwendungsprogramme in der abgegrenzten Laufzeitumgebung ablaufen, die von im Voraus definierten Anwendern übertragen worden sind. Durch diese Sicherheitsmechanismen kann genau festgelegt werden, welches spezielle Sicherheitskonzept für das Fahrzeug verwendet werden soll. Das Sicherheitssystem lässt sich somit flexibel an den jeweiligen Einsatzort anpassen.

Gemäß einer bevorzugten Ausgestaltung des erfindungsgemäßen Verfahrens kann das erste Regelwerk des Filters für die abgegrenzte Laufzeitumgebung von Fahrzeugeinrichtungen aus und/oder von einem externen Computer und/oder Netzwerk aus verändert werden. Gemäß einer weiteren bevorzugten Ausgestaltung des erfindungsgemäßen Verfahrens werden von der zentralen Recheneinheit über eine Fahrzeugbus-Schnittstelle an den Fahrzeugbus übertragene Daten gefiltert. Durch diese Maßnahme kann vorteilhafterweise der Fahrzeugbus gegenüber von der zentralen Recheneinheit kommenden Daten und Anwendungsprogrammen geschützt werden. Beispielsweise können die an den Fahrzeugbus übertragenen Daten auf ihre Herkunft geprüft werden.

Der Datenaustausch zwischen dem Computersystem und externen Einrichtungen kann verschlüsselt erfolgen. Beispielsweise kann das Computersystem alle ausgehenden Daten verschlüsseln und signieren und eingehende Daten entschlüsseln und authentifizieren.

Gemäß einer vorteilhaften Ausbildung der Firewall des erfindungsgemäßen Verfahrens lässt diese nur im Voraus definierte Anwendungsprogramme, im Voraus definierte Protokolle, im Voraus definierte Adressen und/oder im Voraus definierte Inhalte durch. Schließlich können auf dem Computersystem Intrusion-Detection-Programme und/oder Scanner-Programme ablaufen, um die Sicherheit innerhalb des Computersystems weiter zu erhöhen.

Das Computersystem und das Verfahren gemäß der vorliegenden Erfindung bieten insbesondere Schutz vor Viren, Trojanern und Computerwürmern oder dgl. Ferner bieten sie Schutz vor unbefugtem Zugriff auf Daten des Computersystems des Fahrzeugs. Schließlich wird durch die Sicherheitsmechanismen die Gefahr eines Systemabsturzes wesentlich verringert. Außerdem wird vermieden, dass Fehlfunktionen des Computersystems zu Irritationen des Fahrers führen.

An das Computersystem der vorliegenden Erfindung werden besondere Anforderungen hinsichtlich der Systemstabilität gestellt. Ferner liegen die Lebensdauer und Zuverlässigkeit deutlich über den Anforderungen an einen außerhalb eines Fahrzeugs verwendeten Standardcomputer. Es ist beispielsweise möglich, nach einem Unfall Daten wieder herzustellen. Ferner werden Selbsttests im Computersystem durchgeführt. Des Weiteren ist das Computersystem so ausgebildet, dass es im Gegensatz zu herkömmlichen außerhalb von Fahrzeugen verwendeten Computersystemen sehr lange ohne Benutzereingriff oder Wartung funktioniert. Es ist insbesondere für Zeiträume zwischen 10 und 12 Jahren ausgebildet.

Schließlich wird bei dem Computersystem berücksichtigt, dass nur beschränkte Ressourcen hinsichtlich Speicherausstattung, Rechenleistung und dgl. zur Verfügung stehen. Ferner sind diese Ressourcen für die Lebensdauer des Computersystems festgelegt und invariabel. Alle Anpassungen der Sicherheitsmaßnahmen, wie z. B. neue Verschlüsselungsverfahren und zusätzliche Filterregeln orientieren sich an diesen begrenzten Ressourcen.

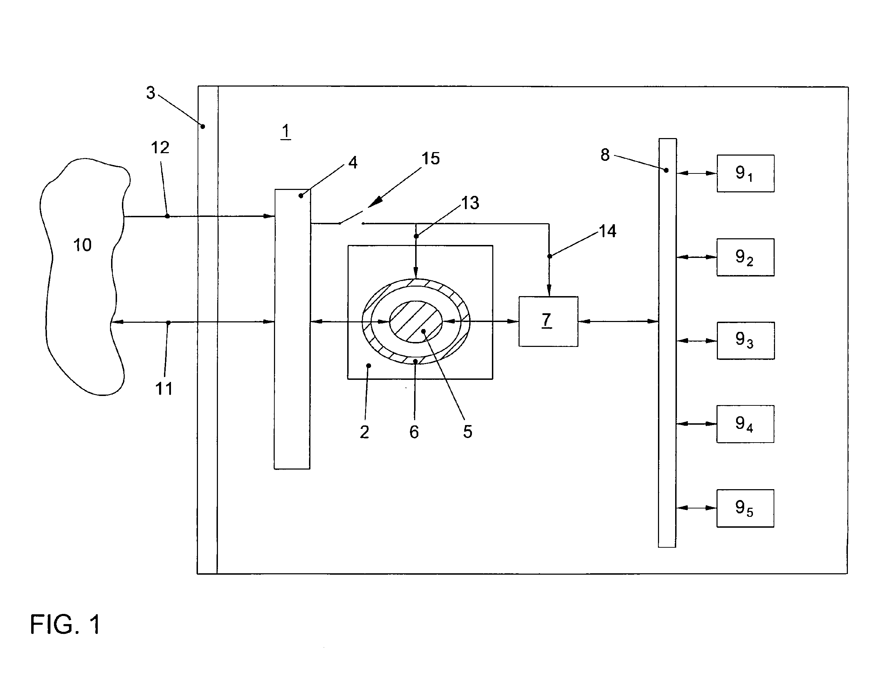

Die vorliegende Erfindung wird nun anhand eines Ausführungsbeispiels mit Bezug zu der Figur im Detail erläutert.

Die Figur zeigt schematisch ein Ausführungsbeispiel des erfindungsgemäßen Computersystems für ein Fahrzeug.

Das Computersystem 1 für das Fahrzeug umfasst eine zentrale Recheneinheit 2. Diese zentrale Recheneinheit 2 ist einerseits mit internen Komponenten des Fahrzeugs vernetzt und schafft andererseits eine Verbindung nach außen. Für den externen Datenaustausch 11, 12 ist eine Firewall 4 und eine Schnittstelle 3 vorgesehen. Die Schnittstelle 3 umfasst beispielsweise einen Anschluss für einen externen Computer oder ein Modem für eine Telefonverbindung, über die ein Datenaustausch mit dem Internet 10 erfolgen kann. Für die Telefonverbindung kann beispielsweise auch eine Mobiltelefoneinrichtung vorgesehen sein.

Die Firewall 4 wirkt als Filter für hereinkommende und herausgehende Daten 11, 12. Die Firewall 4 kann verschiedene Sicherheitseinrichtungen umfassen. Es ist beispielsweise eine Programmanalyse-Einrichtung vorgesehen, mit der Anwendungsprogramme herausfilterbar sind. Es kann im Voraus definiert werden, welche Anwendungsprogramme in das Computersystem 1 des Fahrzeugs hineingelangen dürfen. Ferner können mittels einer Protokollanalyse-Einrichtung im Voraus definierte Protokolle herausfilterbar sein. Des Weiteren können durch eine Adressenanalyse-Einrichtung im Voraus definierte Adressen herausgefiltert werden. Beispielsweise kann bestimmt werden, dass nur Daten, die von einem bestimmten Port kommen, in das Computersystem hineingelangen können. Schließlich können auch über eine Inhaltsanalyse-Einrichtung im Voraus definierte Inhalte des Datenstroms in und aus dem Computersystem 1 herausfilterbar sein. Die Firewall 4 schottet somit das Computersystem 1 nach außen in einer genau definierten Weise ab. Die dabei angewendeten Sicherheitsmechanismen können exakt auf das Fahrzeug abgestimmt werden.

Innerhalb der zentralen Recheneinheit 2 ist eine abgegrenzte Laufzeitumgebung 5 definiert, in der Anwendungsprogramme ablaufen können, ohne Einfluss auf die Laufzeitumgebung außerhalb der abgegrenzten Laufzeitumgebung zu haben. In der zentralen Recheneinheit 2 wird eine virtuelle Recheneinheit eingerichtet, in der die Wirkungen von Anwendungsprogrammen untersucht werden können, ohne dass es möglich ist, dass die Anwendungsprogramme Auswirkungen auf Systemressourcen außerhalb dieser Anwendungsumgebung 5 haben. Insbesondere ist kein Zugriff auf sicherheitsrelevante Einrichtungen des Fahrzeugs möglich.

Die Laufzeitumgebung 5 ist von einem Filter 6 umgeben, der definiert, welche Daten und Programme in die Laufzeitumgebung 5 gelangen, und welche Daten und Programme aus ihr herausgelangen können. Der Filter 6 besitzt hierfür ein fahrzeugspezifisches Regelwerk. Dieses Regelwerk definiert, welche Anwendungsprogramme, die von bestimmen Geräten übertragen worden sind, in der Laufzeitumgebung ablaufen können. Ferner definiert das Regelwerk, von welchen Anwendern übertragene Anwendungsprogramme in der Laufzeitumgebung 5 ablaufen können. Des Weiteren kann der Filter 6 eine Sensorik umfassen, die den Fahrzeugzustand erfasst. Hierfür kann er beispielsweise auf den Fahrzeugbus zugreifen und/oder zusätzliche analoge/digitale Eingangs/Ausgangs-Anschlüsse besitzen.

Auf der zentralen Recheneinheit 2 ist ein sog. Intrusion-Detection-System (IDS) installiert. Es scannt insbesondere die abgegrenzte Laufzeitumgebung 5 und spürt schädigende Daten und Anwendungen auf. Ferner kann das Intrusion-Detection-System auch auf dem gesamten Computersystem 1 ablaufen und hierdurch schädliche Daten und Programme weiterer Systemkomponenten aufspüren. Insbesondere kann der Fahrzeugbus 8 in das Intrusion-Detection-System eingeschlossen werden.

Nachdem ein Anwendungsprogramm in der Laufzeitumgebung 5 getestet und als unkritisch beurteilt wurde, wird das Programm selbst oder von dem Programm generierte Daten durch den Filter 6 zu der Fahrzeugbus-Schnittstelle 7 durchgelassen. Die Fahrzeugbus-Schnittstelle ist eine sog. Application-Protokoll-Interface. Sie koppelt die zentrale Recheneinheit 2 mit dem Fahrzeugbus 8. Mit dem Fahrzeugbus 8 sind die Steuergeräte 9 des Kraftfahrzeugs verbunden. Die Fahrzeugbus-Schnittstelle 7 weist ein weiteres Regelwerk auf, das definiert, welche Daten auf den Fahrzeugbus übertragen werden dürfen. Außerdem können sie festlegen, welche Daten oder Programme an welche Steuergeräte 9 übertragen werden dürfen. Schließlich kann in die Fahrzeugbus-Schnittstelle 7 eine Authentifizierungseinheit integriert sein, durch welche zertifizierte Daten hinsichtlich ihrer Herkunft überprüfbar sind.

Das Regelwerk des Filters 6 und das Regelwerk der Fahrzeugschnittstelle 7 sind im vorliegenden Ausführungsbeispiel von außen veränderbar. Hierfür ist ein Sonderkanal 12 vorgesehen, der über die Leitungen 13 und 14 auf die jeweiligen Regelwerke zugreift. Über einen im Fahrzeug vorgesehenen Schalter 15 kann dieser Sonderkanal geöffnet und geschlossen werden. Auch der Sonderkanal 12 ist über die Firewall 4 sicherheitstechnisch geschützt.

Im vorliegenden Fall wird als Ausführungsbeispiel für das erfindungsgemäße Verfahren beschrieben, wie der Datenverkehr bei einem Programmupdate des Steuergeräts 9₁ kontrolliert wird:

Bevor das Programmupdate an das Computersystem 1 des Fahrzeugs übertragen wird, wird in dem Fahrzeug der Schalter 15 geschlossen, so dass der Sonderkanal für die Änderung des Regelwerks für den Filter 6 geöffnet wird. Der Schalter 15 kann beispielsweise als Menüeintrag oder Dialog ausgeführt sein. Er ist damit ein durch Software realisierter virtueller Schalter. Über den Sonderkanal 12 wird eine Anweisung übertragen, dass in einem begrenzten Zeitintervall ein Programmupdate übertragen wird. Daraufhin wird das Regelwerk für den Filter 6 so angepasst, dass Programmupdates für Steuergeräte in die abgegrenzte Laufzeitumgebung 5 innerhalb eines bestimmten Zeitintervalls gelangen können. Vom Herstellerwerk des Fahrzeugs wird nun ein Programmupdate über das Internet 10 sowie über eine Mobilfunkverbindung an das Fahrzeug übertragen. Die Daten gelangen über die Schnittstelle 3 zu der zentralen Recheneinheit 2. Dabei wird in der Firewall 4 geprüft, ob der Absender des Programmupdates autorisiert ist und ob es sich um ein zulässiges Anwendungsprogramm handelt. Danach werden die Daten nochmals von dem Filter 6 geprüft. Da dieser Filter 6 für ein Programmupdate kurzzeitig geöffnet wurde, kann das Programmupdate in die abgegrenzte Laufzeitumgebung 5 gelangen. Hier wird es gestartet und in seiner Wirkung von einem in der zentralen Recheneinheit 2 installierten Intrusion-Detection-System geprüft. Wird dabei detektiert, dass das Programmupdate keine schädigende Wirkung entfaltet, wird es an die Fahrzeugbus-Schnittstelle 7 übertragen. Hier wird nochmals geprüft, ob die Daten, welche auf den Fahrzeugbus 8 übertragen werden sollen, zulässig sind. Ist dies der Fall, werden die Daten an das Steuergerät 9₁ übertragen, wodurch die Daten oder die in dem Steuergerät 9₁ ablaufenden Programme aktualisiert werden.

Alternativ oder zusätzlich zu der Prüfung der Systemsoftware für die Steuergeräte kann eine mögliche Schadwirkung einer Firmware für ein fremdes Steuergeräte auch anhand von Zertifikaten und Prüfsummen erfolgen. Zusätzlich kann das jeweilige Steuergerät die neu übertragene Systemsoftware auf Konsistenz und mögliche Schadwirkungen, wie z. B. Unverträglichkeiten mit dem vorliegenden Hardwarestand, prüfen.

## Patentansprüche

1. Computersystem (1) für ein Fahrzeug mit einer zentralen Recheneinheit (2), einer ersten Schnittstelle (3) für einen externen Datenaustausch (11, 12) und einer in dem Computersystem (1) bei der ersten Schnittstelle (3) vorgesehenen Firewall (4), die den Datenstrom in das Computersystem (1) des Fahrzeugs filtert,
**dadurch gekennzeichnet,**
**dass** innerhalb der zentralen Recheneinheit (2) eine abgegrenzte Laufzeitumgebung (5) definiert ist, in der Anwendungsprogramme ablaufen können, ohne Einfluss auf die Laufzeitumgebung außerhalb der abgegrenzten Laufzeitumgebung (5) zu haben.

2. Computersystem (1) nach Anspruch 1,
**dadurch gekennzeichnet,**
**dass** die abgegrenzte Laufzeitumgebung (5) einen Laufzeitumgebungs-Filter (6) mit einem ersten Regelwerk für in die abgegrenzte Laufzeitumgebung (5) zu übertragenden Anwendungsprogramme aufweist.

3. Computersystem (1) nach Anspruch 2,
**dadurch gekennzeichnet,**
**dass** das erste Regelwerk definiert, welche Anwendungsprogramme in der abgegrenzten Laufzeitumgebung (5) ablaufen können.

4. Computersystem (1) nach Anspruch 2 oder 3,
**dadurch gekennzeichnet,**
**dass** das erste Regelwerk definiert, von welchen Geräten übertragene Anwendungsprogramme in der abgegrenzten Laufzeitumgebung (5) ablaufen können.

5. Computersystem (1) nach einem der Ansprüche 2 bis 4,
**dadurch gekennzeichnet,**
**dass** das erste Regelwerk definiert, von welchen Anwendern übertragene Anwendungsprogramme in der abgegrenzten Laufzeitumgebung (5) ablaufen können.

6. Computersystem (1) nach einem der Ansprüche 2 bis 5,
**dadurch gekennzeichnet,**
**dass** das erste Regelwerk von Fahrzeugeinrichtungen aus und/oder von einem externen Computer und/oder Netzwerk (10) aus veränderbar ist.

7. Computersystem (1) nach einem der vorstehenden Ansprüche,
**dadurch gekennzeichnet,**
**dass** die zentrale Recheneinheit (2) über eine Fahrzeugbus-Schnittstelle (7) mit dem Fahrzeugbus (8) gekoppelt ist.

8. Computersystem (1) nach Anspruch 7,
**dadurch gekennzeichnet,**
**dass** die Fahrzeugbus-Schnittstelle (7) einen Filter mit einem zweiten Regelwerk umfasst.

9. Computersystem (1) nach Anspruch 8,
**dadurch gekennzeichnet,**
**dass** das zweite Regelwerk definiert, welche Daten auf den Fahrzeugbus übertragen werden dürfen.

10. Computersystem (1) nach einem der Ansprüche 7 bis 9,
**dadurch gekennzeichnet,**
**dass** mit dem Fahrzeugbus (8) Steuergeräte (9) des Fahrzeugs gekoppelt sind.

11. Computersystem (1) nach Anspruch 10,
**dadurch gekennzeichnet,**
**dass** das zweite Regelwerk definiert, an welche Steuergeräte (9) Daten von der zentralen Recheneinheit (2) auf den Fahrzeugbus (8) übertragen werden dürfen.

12. Computersystem (1) nach einem der Ansprüche 7 bis 11,
**dadurch gekennzeichnet,**
**dass** die Fahrzeugbus-Schnittstelle (7) eine Authentifizierungs-Einheit umfasst, durch welche zertifizierte Daten hinsichtlich ihrer Herkunft überprüfbar sind.

13. Computersystem (1) nach einem der vorstehenden Ansprüche,
**dadurch gekennzeichnet,**
**dass** die erste Schnittstelle (3) für einen externen Datenaustausch mit einem externen Computer und/oder Netzwerk (10) ausgebildet ist.

14. Computersystem (1) nach einem der vorstehenden Ansprüche,
**dadurch gekennzeichnet,**
**dass** das Computersystem (1) eine Mobiltelefoneinrichtung für einen externen Datenaustausch aufweist.

15. Computersystem (1) nach einem der vorstehenden Ansprüche,
**dadurch gekennzeichnet,**
**dass** die Firewall (4) eine Programmanalyse-Einrichtung umfasst, mit der im Voraus definierte Anwendungsprogramme herausfilterbar sind.

16. Computersystem (1) nach einem der vorstehenden Ansprüche,
**dadurch gekennzeichnet,**
**dass** die Firewall (4) eine Protokollanalyse-Einrichtung umfasst, mit der im Voraus definierte Protokolle herausfilterbar sind.

17. Computersystem (1) nach einem der vorstehenden Ansprüche,
**dadurch gekennzeichnet,**
**dass** die Firewall (4) eine Adressenanalyse-Einrichtung umfasst, mit der im Voraus definierte Adressen herausfilterbar sind.

18. Computersystem (1) nach einem der vorstehenden Ansprüche,
**dadurch gekennzeichnet,**
**dass** die Firewall (4) eine Inhaltsanalyse-Einrichtung umfasst, mit der im Voraus definierte Inhalte des Datenstroms herausfilterbar sind.

19. Computersystem (1) nach einem der vorstehenden Ansprüche,
**dadurch gekennzeichnet,**
**dass** auf dem Computersystem (1) Intrusion-Detection-Programme und/oder Scanner-Programme installiert sind.

20. Verfahren zum Kontrollieren des Datenverkehrs in ein und/oder in einem Computersystem eines Fahrzeugs, bei dem:
- externe Daten über eine erste Schnittstelle (3) an eine zentrale Recheneinheit (2) übertragen werden, wobei die Daten in einer in dem Computersystem (1) vorgesehenen Firewall (4) gefiltert werden, und
- Anwendungsprogramme innerhalb einer abgegrenzten Laufzeitumgebung (5) ablaufen, ohne Einfluss auf die Laufzeitumgebung außerhalb der abgegrenzten Laufzeitumgebung (5) zu haben.

21. Verfahren nach Anspruch 20,
**dadurch gekennzeichnet,**
**dass** Anwendungsprogramme, die in die abgegrenzte Laufzeitumgebung (5) übertragen werden sollen, gefiltert werden und dass beim Filtern ein erstes Regelwerk für die abgegrenzte Laufzeitumgebung (5) angewendet wird.

22. Verfahren nach Anspruch 20 oder 21,
**dadurch gekennzeichnet,**
**dass** nur im Voraus definierte Anwendungsprogramme in der abgegrenzten Laufzeitumgebung (5) ablaufen.

23. Verfahren nach einem der Ansprüche 20 bis 22,
**dadurch gekennzeichnet,**
**dass** nur solche Anwendungsprogramme in der abgegrenzten Laufzeitumgebung (5) ablaufen, die von im Voraus definierten Geräten übertragen worden sind.

24. Verfahren nach einem der Ansprüche 20 bis 23,
**dadurch gekennzeichnet,**
**dass** nur solche Anwendungsprogramme in der abgegrenzten Laufzeitumgebung (5) ablaufen, die von im Voraus definierten Anwendern übertragen worden sind.

25. Verfahren nach einem der Ansprüche 21 bis 24,
**dadurch gekennzeichnet,**
**dass** das erste Regelwerk des Filters (6) für die abgegrenzte Laufzeitumgebung (5) von Fahrzeugeinrichtungen aus und/oder von einem externen Computer und/oder Netzwerk (10) aus verändert werden kann.

26. Verfahren nach einem der Ansprüche 20 bis 25,
**dadurch gekennzeichnet,**
**dass** von der zentralen Recheneinheit (2) über eine Fahrzeugbus-Schnittstelle (7) an den Fahrzeugbus (8) übertragene Daten gefiltert werden.

27. Verfahren nach einem der Ansprüche 20 bis 26,
**dadurch gekennzeichnet,**
**dass** Daten, die an den Fahrzeugbus (8) übertragen werden, auf ihre Herkunft geprüft werden.

28. Verfahren nach einem der Ansprüche 20 bis 27,
**dadurch gekennzeichnet,**
**dass** die Firewall (4) nur im Voraus definierte Anwendungsprogramme durchlässt.

29. Verfahren nach einem der Ansprüche 20 bis 28,
**dadurch gekennzeichnet,**
**dass** die Firewall (4) nur im Voraus definierte Protokolle durchlässt.

30. Verfahren nach einem der Ansprüche 20 bis 29,
**dadurch gekennzeichnet,**
**dass** die Firewall (4) nur im Voraus definierte Adressen durchlässt.

31. Verfahren nach einem der Ansprüche 20 bis 30,
**dadurch gekennzeichnet,**
**dass** die Firewall (4) nur im Voraus definierte Inhalte durchlässt.

32. Verfahren nach einem der Ansprüche 20 bis 31,
**dadurch gekennzeichnet,**
**dass** auf dem Computersystem (1) Intrusion-Detection-Programme und/oder Scanner-Programme ablaufen.
